Europäisches Patentamt

(19) European Patent Office

Office européen des brevets

(11) Numéro de publication: **0 034 286**
**B1**

(12) **FASCICULE DE BREVET EUROPEEN**

(45) Date de publication du fascicule du brevet:
**24.10.84**

(21) Numéro de dépôt: **81100668.3**

(22) Date de dépôt: **30.01.81**

(51) Int. Cl.³: **G 02 B 5/16,** H 01 B 13/22

(54) Procédé et dispositif de fabrication d'un câble à fibres optiques étanche à l'eau.

(30) Priorité: **06.02.80 FR 8002563**

(43) Date de publication de la demande:
**26.08.81 Bulletin 81/34**

(45) Mention de la délivrance du brevet:
**24.10.84 Bulletin 84/43**

(84) Etats contractants désignés:
**CH DE FR GB IT LI NL SE**

(56) Documents cités:
**DE - A - 2 604 307**
**DE - A - 2 801 231**
**DE - C - 681 912**
**GB - A - 1 257 325**
**GB - A - 2 021 282**
**US - A - 4 143 942**

(73) Titulaire: **COMPAGNIE LYONNAISE DE TRANSMISSIONS OPTIQUES Société anonyme dite:,
170, Quai de Clichy, F-92111 Clichy (FR)**

(72) Inventeur: **Grenat, Bernard, 257, Chemin de Fontanières, F-69350 La Mulatiere (FR)**

(74) Mandataire: **Weinmiller, Jürgen et al, Zeppelinstrasse 63, D-8000 München 80 (DE)**

## Description

La présente invention concerne un procédé de fabrication d'un câble à fibres optiques comprenant au moins une structure cylindrique constituée en un bloc plastique dans lequel sont ménagés une pluralité d'alvéoles longitudinaux remplis d'un matériau visqueux dans lesquels sont logées des fibres optiques. Elle s'étend en outre à un dispositif de fabrication d'un câble à fibres optiques selon ce procédé.

Le procédé usuel de fabrication d'un tel câble, consistant à introduire les fibres optiques dans chaque alvéole, à remplir les alvéoles de matériau visqueux chauffé afin de le rendre plus fluide, puis à entourer les alvéoles par extrusion de la gaine en matériau plastique, est incommode et ne procure pas un câble de très bonne qualité, car le matériau visqueux subit une rétraction au refroidissement et tend à laisser apparaître des vides à l'intérieur des alvéoles.

La présente invention a pour but de remédier à ces inconvénients, et de procurer un câble à fibres optiques d'excellente qualité par un procédé simple et rapide, et à l'aide d'un dispositif également simple et peu coûteux.

Le procédé selon l'invention est caractérisé en ce que l'on introduit des fibres optiques dans des tubes interrompus sur une certaine longueur, en ce que l'on injecte un matériau visqueux sous pression dans lesdits tubes par les interruptions, de façon que ledit matériau visqueux vienne remplir les tubes autour des fibres optiques, en ce que l'on fait ressortir les fibres optiques desdits tubes, ces dernières se trouvant alors entourées de matériau visqueux, en ce que l'on extrude simultanément, par une filière annulaire, autour desdites fibres ressortant desdits tubes, un matériau thermoplastique sous une pression suffisante pour noyer complètement lesdites fibres entourées de matériau visqueux, et en ce que l'on refroidit rapidement la structure cylindrique ainsi obtenue.

De préférence, on injecte le produit visqueux et on extrude sous des pressions relatives telles que l'on évite tout gonflement radial du matériau thermoplastique avant son refroidissement, et que l'on assure un remplissage uniforme en produit extrudé autour des fibres optiques entourées de matériau visqueux.

On asservit avantageusement la vitesse d'avance de la structure cylindrique refroidie à la vitesse d'introduction des fibres optiques nues.

Le dispositif selon l'invention est caractérisé en ce qu'il comprend une enceinte cylindrique interne à extrémité avant conique formant poinçon et fond arrière, des tubes de guidage des fibres optiques, disposés parallèlement à l'axe de l'enceinte cylindrique interne, traversant le fond arrière et l'extrémité avant conique, et interrompus pour l'introduction à leur intérieur d'un matériau visqueux, un conduit d'alimentation en matériau visqueux débouchant dans ladite enceinte interne, une enceinte cylindrique externe d'alimentation en matériau thermoplastique fondu, se terminant à l'avant par une filière conique entourant ledit poinçon de l'enceinte cylindrique interne, et un conduit d'alimentation en matériau thermoplastique débouchant dans ladite enceinte externe.

Il comprend en outre de préférence des moyens d'asservissement de la vitesse d'avance de la structure cylindrique refroidie à la vitesse d'introduction des fibres optiques nues dans l'enceinte interne.

L'invention est décrite ci-après plus en détail à l'aide de quelques exemples de réalisation et en référence aux figures du dessin annexé.

La figure 1 représente en coupe transversale un câble à noyau central porteur et quatre structures alvéolées, fabriqué selon le procédé de l'invention.

La figure 2 représente en coupe transversale un câble à sept structures alvéolées, fabriqué selon ce procédé.

La figure 3 représente en coupe transversale un autre câble à armure interne indéformable sous l'effet de la pression de l'eau, fabriqué selon ce procédé.

La figure 4 représente en perspective avec coupe diamétrale partielle un dispositif de fabrication d'une structure cylindrique mettant en œuvre le procédé selon l'invention.

La figure 5 représente plus schématiquement que la figure 4 le même dispositif muni de dispositifs d'alimentation en matériau visqueux et en matériau thermoplastique de gainage.

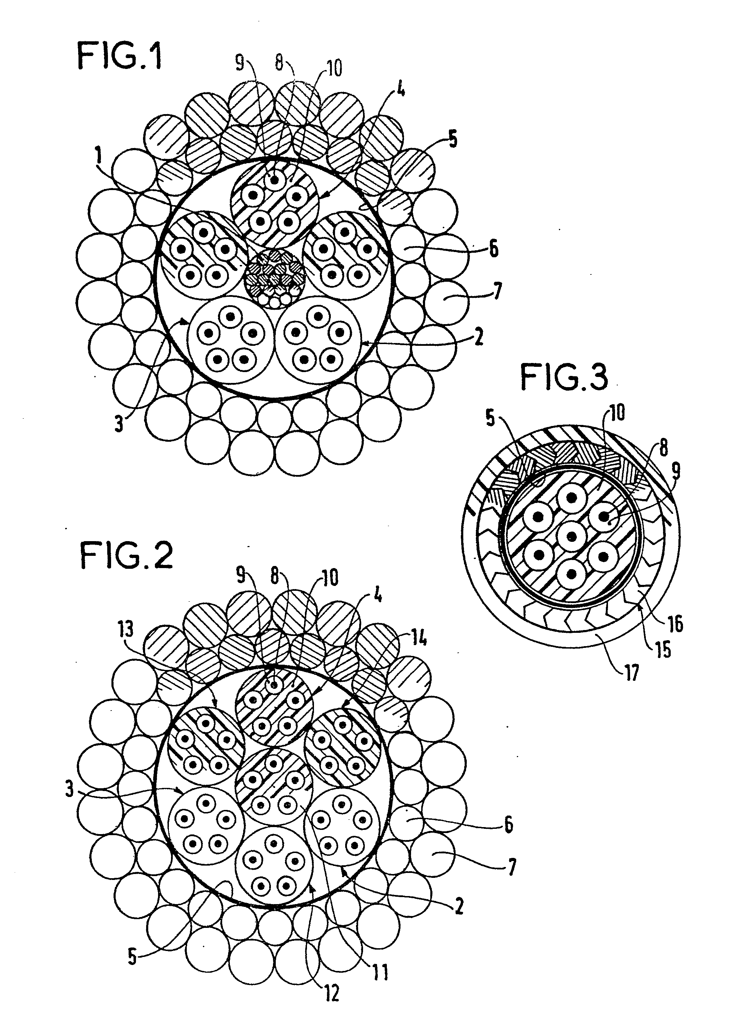

La figure 1 représente un câble de forage pétrolier comportant, en allant du centre vers la périphérie du câble:
— un noyau central porteur 1 formé de torons de fils d'acier ou de fils de polyester ou de polyamide aromatique à haute résistance à la traction, telle que le polyamide «Kevlar»® vendue par la Société du Pont de Nemours,
— autour de ce noyau, plusieurs structures alvéolées telles que 2, 3, 4, contenant des fibres optiques 8 logées dans les alvéoles 9 remplis d'un matériau tel que le polybutène. L'ensemble est contenu dans le matériau thermoplastique 10, par exemple du polyéthylène ou un polyamide telle que celle commercialisée sous la marque «Nylon»® par la société du Pont de Nemours. Ces structures sont enroulées en hélice autour du noyau central 1,
— un matelas amortisseur 5 formé de rubans de tissu de verre enroulés en hélice autour de l'âme du câble,
— une double armure formée de fils d'acier à haute résistance répartis en deux couches 6 et 7 superposées enroulées à pas inverses.

Dans la variante représentée en figure 2, le porteur central du câble est remplacé par la structure alvéolée 11 formée de fibres optiques noyées dans un matériau de remplissage visqueux, l'ensemble étant enrobé dans un matériau thermoplastique, comme les structures 2, 3, 4 de la figure 1. Cette structure axiale est entourée de six autres structures identiques 2, 3, 4, ... de même diamètre qu'elle, mutuellement tangentes et enroulées en hélice autour d'elle. L'espace disponible est ainsi rempli au maximum. Le matelas amortisseur 5 et les couches 6 et 7 d'armure sont identiques à ceux de la figure 1.

La figure 3 représente une autre variante de câble sous-marin à fibres optiques selon l'invention. Dans ce câble, une structure cylindrique unique, à fibres optiques 8 disposées dans des alvéoles fermés 9 remplis d'un matériau visqueux, eux-mêmes noyés dans un matériau thermoplastique 10, est recouverte d'un matelas 5 formé de rubans de soie de verre enroulés en hélice, puis d'une armature 15 formant voûte constituée par des fils d'acier 16 profilés en forme générale de V, imbriqués les uns dans les autres de façon à former une structure indéformable sous les effets de la pression de l'eau. Le tout est recouvert d'une gaine extérieure 17 en polyéthylène.

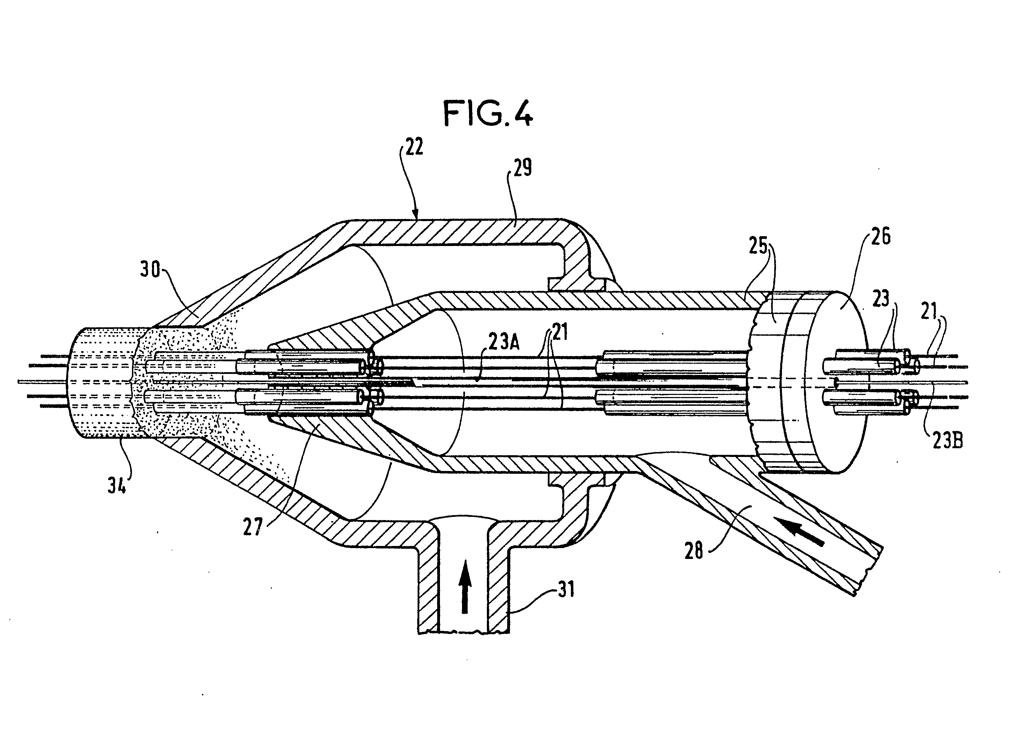

Dans la figure 4, un appareil de formation d'une structure alvéolée est alimenté en fibres optiques nues ou gainées 21 provenant d'une ou plusieurs bobines de stockage placées en amont, non représentées. L'appareil de remplissage et d'extrusion 22 comporte une série de tubes 23 placés concentriquement ou parallèlement par rapport à son axe, et entourés d'une enveloppe cylindrique externe 25 fermée à ses deux extrémités. A l'arrière, une cloison plane 26 est traversée par les tubes. A l'avant, une embouchure conique 27 est également traversée par les tubes 23, qui viennent légèrement en saillie au-delà de son extrémité. Un tube central 23A, non interrompu, est prévu pour le passage d'un élément métallique interne 23B, destiné à assurer la résistance mécanique du câble. Il débouche au ras de l'extrémité de l'embouchure conique 27. La paroi latérale de l'enveloppe 25 est traversée par la tubulure 28 d'alimentation en matériau de remplissage à l'état liquide, par exemple de polybutène. L'extrémité avant 27 constitue le nez d'un poinçon incorporé au dispositif d'extrusion.

Une enveloppe extérieure 29 se referme côté amont sur l'enveloppe interne 25 et se termine côté aval par une filière conique 30 coaxiale au poinçon 27. Elle est reliée par une tubulure latérale 31 à une extrudeuse, non représentée, d'alimentation en matériau thermoplastique fondu (polyéthylène, polyamide, etc.) qui forme le gainage des alvéoles. La structure formée est représentée schématiquement en 34.

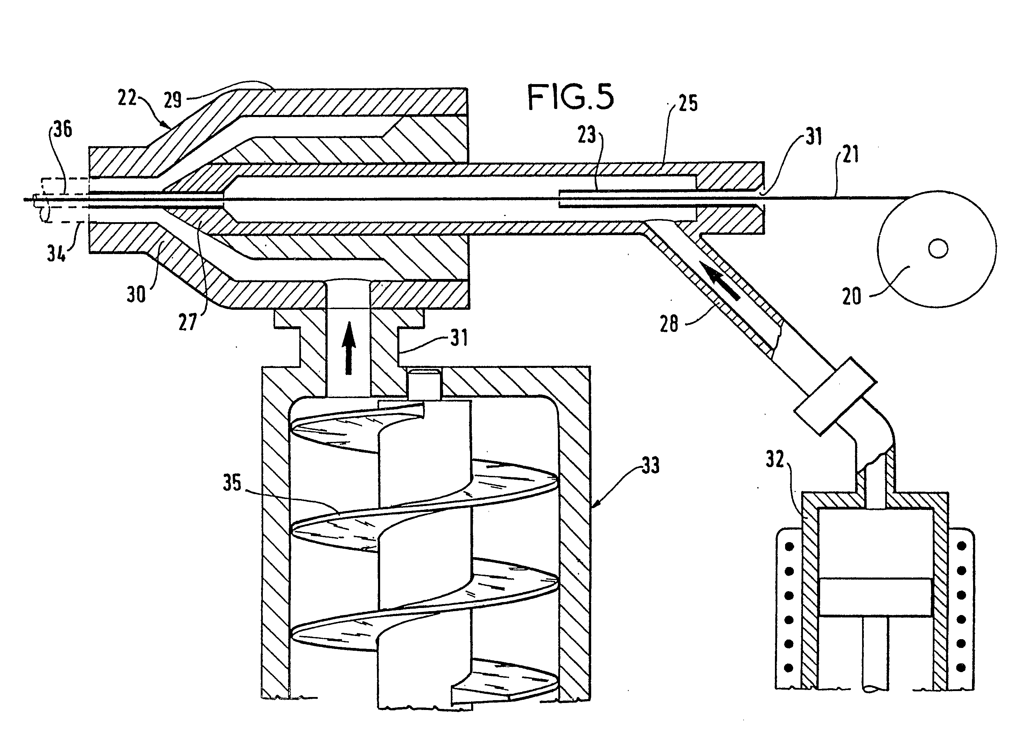

La figure 5 représente schématiquement l'ensemble du dispositif de fabrication. Un touret 20 approvisionne l'appareil en fibres optiques (une seule fibre 21 étant représentée pour plus de clarté). Une buse d'entrée 31 du tube 22 guide la fibre à son entrée dans l'appareil de remplissage et d'extrusion. L'alimentation en matériau de remplissage des alvéoles par l'interruption des tubes 23 est effectuée par un pistolet chauffant 32 débouchant dans la tubulure 28 pénétrant à l'arrière de l'enveloppe 25.

D'autre part, le matériau thermoplastique fondu refoulé par une machine à extruder ou boudineuse 33 à vis 35 pénètre par la tubulure 31 dans l'espace entre le poinçon 27 et la filière 30 pour constituer la structure cylindrique plastique 34 dans laquelle est formé l'alvéole 36 de logement de la fibre 21, entièrement rempli de matériau visqueux au cours du passage de la fibre dans l'enveloppe interne 25.

Pour que ces opérations s'effectuent correctement, il est bon de respecter plusieurs conditions:

– la pression d'injection du matériau visqueux doit être choisie de façon à éviter un gonflement radial du matériau thermoplastique chaud à sa sortie de l'ensemble poinçon-filière

– il convient d'effectuer un refroidissement immédiat et énergique du matériau thermoplastique à la sortie de l'ensemble poinçon-filière pour réduire les retraits longitudinal et radial du matériau à une valeur acceptable, par exemple à l'aide d'un dispositif connu d'arrosage à l'eau (non représenté)

– il convient d'égaliser les vitesses d'avance de la fibre optique nue ou protégée de la bobine de stockage, à celle de la structure extrudée complètement refroidie, au moyen d'un dispositif connu en lui-même d'asservissement de la vitesse linéaire du produit extrudé froid à la vitesse de déroulement de la fibre (non représenté).

**Revendications**

1. Procédé de fabrication d'un câble à fibres optiques comprenant au moins une structure cylindrique (2, 3, 4) constituée en un bloc plastique dans lequel sont ménagés une pluralité d'alvéoles longitudinaux remplis d'un matériau visqueux dans lesquels sont logées des fibres optiques, caractérisé en ce que l'on introduit des fibres optiques (21) dans des tubes (23) interrompus sur une certaine longueur, en ce que l'on injecte un matériau visqueux sous pression dans lesdits tubes par les interruptions, de façon que ledit matériau visqueux vienne remplir les tubes autour des fibres optiques, en ce que l'on fait ressortir les fibres optiques desdits tubes, ces dernières se trouvant alors entourées de matériau visqueux, en ce que l'on extrude simultanément, par une filière annulaire (30), autour desdites fibres ressortant desdits tubes, un matériau thermoplastique sous une pression suffisante pour noyer complètement lesdites fibres ainsi entourées de matériau visqueux, et en ce que l'on refroidit rapidement la structure cylindrique (34) ainsi obtenue.

2. Procédé selon la revendication 1, caractérisé en ce que l'on injecte le produit visqueux et l'on extrude le matériau thermoplastique sous des pressions relatives telles que l'on évite tout gonflement radial du matériau thermoplastique avant son refroidissement, et que l'on assure un remplissage uniforme en produit extrudé autour des fibres optiques entourées de matériau visqueux.

3. Procédé selon les revendications 1 ou 2, caractérisé en ce que l'on asservit la vitesse d'avance de la structure cylindrique refroidie à la vitesse d'introduction des fibres optiques nues.

4. Dispositif de fabrication d'un câble à fibres optiques selon le procédé de la revendication 1, caractérisé en ce qu'il comprend une enceinte cylindrique interne (25, fig. 4) à extrémité avant conique (27) formant poinçon et fond arrière (26), des tubes (23) de guidage des fibres optiques, disposés parallèlement à l'axe de l'enceinte cylindrique interne, traversant le fond arrière et l'extrémité avant conique, et interrompus pour l'introduction à leur intérieur d'un matériau visqueux, un conduit (28) d'alimentation en matériau visqueux débouchant dans ladite enceinte interne, une enceinte cylindrique externe (29) d'alimentation en matériau thermoplastique fondu, se terminant à l'avant par une filière conique (30) entourant ledit poinçon de l'enceinte cylindrique interne, et un conduit (31) d'alimentation en matériau thermoplastique débouchant dans ladite enceinte externe.

5. Dispositif selon la revendication 4, caractérisé en ce qu'il comprend en outre des moyens d'asservissement de la vitesse d'avance de la structure cylindrique refroidie à la vitesse d'introduction des fibres optiques nues dans l'enceinte interne.

## Claims

1. A method for manufacturing an optical fibre cable comprising at least one cylindrical structure (2, 3, 4) constituted by a plastic block in which a plurality of longitudinal openings are provided, which are filled with a viscous substance and in which are housed optical fibres, characterized in that the optical fibres (21) are inserted into tubes (23) which are interrupted over a certain length, that a viscous substance is injected under pressure into said tubes through the interruptions, so that the viscous substance fills the tubes around the optical fibres, that the optical fibres are made to protrude beyond said tubes, these latters then being surrounded by viscous substance, that a thermoplastic material is simultaneously extruded through an annular orifice (30) around said fibres protruding beyond said tubes, this material being submitted to a pressure which is sufficient for completely immerging said fibres thus surrounded by the viscous substance, and that the thus obtained cylindrical structure (34) is rapidly cooled down.

2. A method according to claim 1, characterized in that the viscous substance is injected and the thermoplastic material is extruded at relative pressures such that any radial inflation of the thermoplastic material before its cooling is avoided, and that a uniform filling with extruded substance around the optical fibres surrounded with viscous material is ensured.

3. A method according to claims 1 or 2, characterized in that the advance speed of the cooled cylindrical structure is adapted to the insertion speed of the bare optical fibres.

4. An apparatus for manufacturing an optical fibre cable according to the method of claim 1, characterized in that it comprises an inner cylindrical chamber (25, fig. 4) with a conical front end (27) forming a nozzle and rear end plate (26), guide tubes (23) for guiding the optical fibres, the tubes being disposed parallelly to the axis of the inner cylindrical chamber, passing through the rear end plate and the conical front end, and interrupted for the introduction of a viscous material into these tubes, a pipe (28) for supplying the viscous material, this pipe opening in said inner chamber, an outer cylindrical chamber (29) for supplying melted thermoplastic material, this chamber terminating at the front side in a conical die (30) surrounding said nozzle of said inner cylindrical chamber, and a pipe (31) for supplying thermoplastic material, this pipe opening into said outer chamber.

5. An apparatus according to claim 4, characterized in that it further comprises means for adapting the advance speed of the cooled cylindrical structure to the insertion speed of the bare optical fibres into the inner chamber.

## Patentansprüche

1. Verfahren zur Herstellung eines Lichtleitfaserkabels, das mindestens eine zylindrische Struktur (2, 3, 4) aufweist, die aus einem Plastikblock besteht, in dem eine Vielzahl von mit einem viskosen Material gefüllten Längsöffnungen angebracht sind, in welchen Lichtleitfasern angeordnet sind, dadurch gekennzeichnet, dass Lichtleitfasern (21) in Rohre (23) eingeführt werden, die über eine gewisse Länge unterbrochen sind, dass ein viskoses Material unter Druck durch die Unterbrechungen in die Rohre injiziert wird, so dass das viskose Material die Rohre rund um die Lichtleitfasern füllt, dass die Lichtleitfasern wieder aus den Rohren herausgeführt werden, wobei die letzteren dann mit viskosem Material umgeben sind, dass gleichzeitig über eine ringförmige Düse (30) um die aus den Rohren heraustretenden Fasern ein thermoplastisches Material unter einem Druck extrudiert wird, der ausreicht, dass die so mit viskosem Material umgebenen Fasern gänzlich eingetaucht werden, und dass die so erhaltene zylindrische Struktur (34) schnell abgekühlt wird.

2. Verfahren nach Anspruch 1, dadurch gekennzeichnet, dass unter einem solchen Druck das viskose Material injiziert und das thermoplastische Material extrudiert wird, dass jedes radiale Aufblähen des thermoplastischen Materials vor seiner Abkühlung vermieden wird, und dass ein gleichmässiges Füllen mit extrudiertem Material um die von viskosem Material umgebenen Lichtleitfasern bewirkt wird.

3. Verfahren nach den Ansprüchen 1 oder 2, dadurch gekennzeichnet, dass man die Vorrückgeschwindigkeit der abgekühlten zylindrischen Struktur an die Einführgeschwindigkeit der nackten Lichtleitfasern anpasst.

4. Vorrichtung zur Herstellung eines Lichtleitfaserkabels nach dem Verfahren gemäss Anspruch 1, dadurch gekennzeichnet, dass sie eine zylindrische innere Kammer (25, Fig. 4) mit vorderem konischem Ende (27), das eine Düse bildet, und einem hinteren Boden (26) aufweist, wobei zur Führung der Lichtleitfasern Führungsrohre (23) parallel zur Achse der inneren zylindrischen Kammer angeordnet sind, den hinteren Boden und das vordere konische Ende durchqueren und zur Einführung eines viskosen Materials in ihr Inneres unterbrochen sind, wobei eine Leitung (28) zur Versorgung mit viskosem Material in die genannte innere Kammer mündet, wobei eine äussere zylindrische Kammer (29) zur Versorgung mit geschmolzenem thermoplastischem Material vorne in einer die Düse der inneren zylindrischen Kammer umgebenden konischen Düse (30) endet, und eine Leitung (31) zur Versorgung mit thermoplastischem Material in die äussere Kammer mündet.

5. Vorrichtung nach Anspruch 4, dadurch gekennzeichnet, dass sie ausserdem Mittel zur Anpassung der Vorrückgeschwindigkeit der abgekühlten zylindrischen Struktur an die Einführgeschwindigkeit der nackten Lichtleitfasern in die innere Kammer aufweist.

FIG.1

FIG.2

FIG.3

0 034 286

7

FIG.4

FIG.5